# EUROPÄISCHE PATENTSCHRIFT

(11) **EP 1 744 072 B1**
(45) Veröffentlichungstag und Bekanntmachung des Hinweises auf die Patenterteilung: **10.09.2008**
(21) Anmeldenummer: 06013776.7
(22) Anmeldetag: 04.07.2006
(51) Int. Cl.: F16C 35/06, B29C 45/14, F16C 35/04

(54) **Verfahren zur Herstellung einer Lageranordnung und Lageranordnung**
Method of manufacturing a bearing assembly and bearing assembly
Procede de fabrication d'un ensemble palier et palier

(30) Priorität: 14.07.2005 DE 102005032887
(43) Veröffentlichungstag der Anmeldung: 17.01.2007
(73) Patentinhaber: Aktiebolaget SKF, 415 50 Göteborg (SE)
(72) Erfinder: Helfrich, Thomas, 97456 Dittelbrunn (DE); Dilje, Alexander, 97422 Schweinfurt (DE); Hauck, Helmut, 97502 Euerbach (DE); Dümpert, Michael, 97464 Niederwerrn (DE)
(74) Vertreter: Kohl, Thomas

(56) Entgegenhaltungen:
- DE-A1- 19 961 224
- DE-U1- 29 612 445

## Beschreibung

Die Erfindung betrifft ein Verfahren zur Herstellung einer Lageranordnung, die einen Lagerträger aufweist, der mindestens ein erstes Lager zur zumindest radialen Lagerung eines Wellenteils und mindestens ein zweites Lager zur radialen Lagerung eines stangenförmigen Bauteils aufweist. Des weiteren betrifft die Erfindung eine Lageranordnung.

Lageranordnungen dieser Art sind im Stand der Technik bekannt. Sie werden insbesondere in Getrieben eingesetzt, bei denen einerseits Getriebewellen gelagert werden müssen und die andererseits eine Lagerungsmöglichkeit für Getriebeschaltstangen aufweisen müssen.

Die DE 199 61 224 A1 zeigt einen als Blechteil ausgebildeten Lagerträger, der zwei nebeneinander angeordnete Wälzlager aufnimmt. Der Lagerträger ist dabei spanlos geformt. Der Träger ist für ein Schaltgetriebe vorgesehen, das auch Schaltwellen umfasst. Um diese zu lagern, weist der Lagerträger hülsenförmige Abschnitte auf, die in ihn eingeformt sind.

Eine ähnliche Lösung ist in der DE 203 09 913 U1 offenbart. Hier ist ein plattenförmiger Lagerträger aus Blech gezeigt, der zwei angeformte Sitzflächen zur Aufnahme je eines Lagers hat. Der Lagerträger weist weiterhin zwei außerhalb der Sitzflächen ausgebildete Hülsen auf, die zum Führen bzw. Lagern von Schaltstangen vorgesehen sind.

Aus der DE 197 19 744 A1 ist weiterhin ein Lagerträger zur Aufnahme einer Lageranordnung für eine Welle bekannt, wobei hier der Lagerträger aus Kunststoff besteht. Er ist als ein mit der Lageranordnung durch Umspritzen verbundenes Spritzgießteil hergestellt.

Aus der DE 196 09 209 A1 geht eine Schaltvorrichtung für ein Zahnräderwechselgetriebe hervor, bei dem eine Schaltstange an einem Schaltgehäuse-Einsatz und an einem den Einsatz haltenden Gehäuseteil eines zweiteiligen Getriebegehäuses axial verschiebbar gelagert ist. Eine ähnliche Lösung zeigt die DE 196 09 210 C1**.**

Bei den vorbekannten Lösungen ist es nachteilig, dass der Herstellaufwand für die Lagerträger dann relativ hoch ist, wenn dafür Sorge getragen werden muss, dass ein aus Blech bestehender Lagerträger auch die Führungen für die Schaltstangen mit hinreichender Präzision aufweist. Bei den Lösungen, bei denen ein Lagerträger aus Kunststoff vorgesehen wird, ist es nachteilig, dass solche Lagerträger oft nicht die mechanische Festigkeit aufweisen, wie sie für einen stabilen Betrieb eines Getriebes erforderlich sind.

Hinzu kommt noch folgendes Problem: Gelegentlich ist es aus Montagegründen sehr nachteilig, wenn sowohl die zu lagernden Wellen des Getriebes als auch die Schaltstangen gleichzeitig montiert werden müssen.

Hieran führt bei den vorbekannten Lösungen jedoch kein Weg vorbei, so dass die damit einher gehenden Nachteile in Kauf genommen werden müssen.

Schließlich ist es nachteilig, dass bekannte Lösungen relativ teuer sind, weil die Herstellung des Blechteils aufwändig ist. Ferner ist es bei der Verwendung eines Blechlagerträgers unvermeidbar, dass dieser ein relativ hohes Gewicht aufweist.

Der Erfindung liegt daher die **Aufgabe** zugrunde, ein Verfahren zur Herstellung einer Lageranordnung und eine solche eine Lageranordnung zu schaffen, mit dem bzw. mit der es möglich ist, die obigen Nachteile zu vermeiden. Es soll also erreicht werden, dass die Herstellung des Lagerträgers in einfacherer und damit kostengünstigerer Weise erfolgen kann, als dies bislang der Fall ist, wobei dennoch für eine präzise Lagerung der zu lagernden Wellen und auch von Gestängen, insbesondere Schaltgestängen, Sorge getragen werden soll. Der Lagerträger soll dennoch eine sehr hohe mechanische Festigkeit aufweisen. Die Montage des Lagerträgers soll deutlich einfacher sein, als dies für vorbekannte Lösungen gilt. Ferner soll sich der Lagerträger durch ein geringes Gewicht auszeichnen.

Die **Lösung** dieser Aufgabe durch die Erfindung ist verfahrensgemäß durch die folgenden Schritte gekennzeichnet:
a) Herstellen eines Kunststoff-Trägerteils mittels Spritzgießen, wobei ein Lagerring des zweiten Lagers der Lageranordnung durch den Spritzgießvorgang bleibend mit dem Kunststoff-Trägerteil verbunden wird;
b) Herstellen des Lagerträgers aus eigensteifem Material, insbesondere aus metallischem Material, wie Blech, Aluminiumguss, Magnesiumguss oder Stahlguss, wobei in den Lagerträger eine zur Aufnahme des Kunststoff-Trägerteils vorgesehene Aufnahme, insbesondere eine Aussparung, ausgebildet wird und wobei mindestens eine Aufnahme für einen Lagerring des ersten Lagers der Lageranordnung ausgebildet wird;
c) Platzieren und Fixieren des Kunststoff-Trägerteils in der Aufnahme, insbesondere in der Aussparung, des Lagerträgers.

Die Erfindung stellt also darauf ab, dass in einem ersten Prozessschritt zunächst ein Kunststoff-Trägerteil vorgefertigt wird, in dem in-situ der mindestens eine Lagerring des zweiten Lagers mit dem Trägerteil verbunden wird, was in klassischer Weise durch Umspritzen des Lagerrings erfolgen kann. Bei dem zweiten Lager handelt es sich bevorzugt um das Schaltgestänge-Lager bzw. um die Schaltgestänge-Führung in einem Schaltgetriebe. Vorher, gleichzeitig oder anschließend wird aus Blech der Lagerträger gefertigt, der zur Aufnahme des mindestens einen Lagers zur Lagerung des Wellenteils, insbesondere einer Getriebewelle, ausgestattet wird, wozu hier die Aufnahme für den Lagerring des ersten Lagers ausgebildet wird. Schließlich wird das Kunststoff-Trägerteil samt dem mindestens einen Lagerring des zweiten Lagers (für die Schaltstangenlagerung) in einer speziell hierfür vorgesehenen Aufnahme bzw. Ausnehmung im Lagerträger positioniert und fixiert. Der Lagerträger kann auch aus beliebigem eigensteifen Material bestehen, beispielsweise aus metallischem Material, wie aus Blech, aus Leichtmetall (insbesondere Leichtmetallguss, d.h. bevorzugt Aluminium- oder Magnesiumguss) oder aus Stahlguss. Die Aufnahme für das Kunststoff-Trägerteil kann als Aussparung oder als beliebig gestaltete Halterung ausgebildet sein.

Eine erste Weiterbildung sieht vor, dass beim Spritzgießen des Kunststoff-Trägerteils gemäß obigem Schritt a) der mindestens eine Lagerring des zweiten Lagers mindestens einseitig axial umspritzt wird, um einen axialen Umgriff des Lagerrings zu schaffen; bevorzugt wird ein beidseitiges axiales Umspritzen vorgesehen.

Ferner kann vorgesehen sein, dass beim Spritzgießen des Kunststoff-Trägerteils gemäß obigem Schritt a) das Kunststoff-Trägerteil mit mindestens einem Verbindungsabschnitt versehen wird. Dieser kann als flächige Erstreckung über das Grundteil des Trägerteils ausgebildet sein, um das Trägerteil später damit am Lagerträger festlegen zu können.

Beim Herstellen des Lagerträgers gemäß obigem Schritt b) wird bevorzugt ein ebenes Blechteil durch Umformen, insbesondere durch Stanzen, Pressen und/oder Tiefziehen, zu dem Lagerträger ausgebildet.

Das Fixieren des Kunststoff-Trägerteils in der Aufnahme bzw. Aussparung des Lagerträgers gemäß obigem Schritt c) kann mittels Anschrauben oder mittels Vernieten oder in sonstiger Weise erfolgen, mit der eine feste Verbindung zwischen Kunststoff-Trägerteil und Lagerträger erreicht werden kann.

Die Lageranordnung, die einen Lagerträger aufweist, der mindestens ein erstes Lager zur zumindest radialen Lagerung eines Wellenteils und mindestens ein zweites Lager zur radialen Lagerung eines stangenförmigen Bauteils aufweist, ist erfindungsgemäß so ausgebildet, dass der Lagerträger aus einem Teil aus eigensteifem Material besteht, insbesondere aus einem Blechteil, und eine zur Aufnahme eines Kunststoff-Trägerteils vorgesehene Aufnahme bzw. Aussparung und mindestens eine Aufnahme für einen Lagerring des ersten Lagers aufweist, wobei in die Aufnahme das Kunststoff-Trägerteil eingesetzt ist, das mindestens einen Lagerring des zweiten Lagers aufweist, das beim Spritzgießen des Kunststoff-Trägerteils in-situ mit dem Kunststoff-Trägerteil verbunden ist, und wobei das Kunststoff-Trägerteil am Lagerträger fixiert ist.

Das Kunststoff-Trägerteil umgreift dabei bevorzugt den mindestens einen Lagerring des zweiten Lagers mindestens einseitig, vorzugsweise beidseitig, axial mittels mindestens eines axialen Umgriffs.

Das erste Lager ist bevorzugt ein Wälzlager. Es können auch zwei erste Lager nebeneinander im Lagerträger vorgesehen werden, wobei deren Drehachsen parallel zueinander ausgerichtet sind. Auch das zweite Lager kann ein Wälzlager sein. Dabei kann zwischen dem Lagerring des zweiten Lagers und dem stangenförmigen Bauteil ein Wälzkörpersatz oder Rollensatz angeordnet sein. In diesem Falle wird also auf einen Lagerinnenring verzichtet; dieser wird durch das stangenförmige Bauteil selbst gebildet. Der Wälzkörpersatz bzw. Rollensatz kann einen Käfig aufweisen. Möglich ist es aber auch, dass das zweite Lager ein Gleitlager ist.

Bezüglich der Festlegung des ersten Lagers oder der ersten Lager im Lagerträger sind verschiedene Möglichkeiten denkbar. Nach einer Ausgestaltung ist vorgesehen, dass der Lagerträger im Bereich der Aufnahme für den Lagerring des ersten Lagers in eine Ringnut im Außenumfang des Lagerrings des ersten Lagers eingreift. Eine Alternative sieht vor, dass der Lagerträger im Bereich der Aufnahme für den Lagerring des ersten Lagers topfförmig ausgebildet ist und eine Sitzabschnitt für den Außenumfang des Lagerrings des ersten Lagers bildet.

Um die Lageranordnung befestigen zu können, kann der Lagerträger, vorzugsweise an seinem äußeren radialen Bereich, eine Anzahl Befestigungselemente aufweisen. Die Befestigungselemente können Bohrungen zum Durchtritt einer Schraube sein. Sie können auch mit einem Gewinde versehene Bohrungen zum Zusammenwirken mit einer Schraube sein. Um die Festigkeit der Anbindung des Lagerträgers zu erhöhen, kann er im Bereich der Befestigungselemente eine vergrößerte Dicke haben, er kann auch im Bereich der Befestigungselemente eine Verbreiterung in radiale Richtung aufweisen.

Der Lagerträger besteht mit Vorteil aus gehärtetem Stahl.

Bevorzugt ist das Wellenteil, das mittels der Lageranordnung gelagert wird, Bestandteil einer Getriebewelle, insbesondere eines Kfz-Getriebes. Das stangenförmige Bauteil ist bevorzugt die Schaltstange eines Getriebes, insbesondere eines Kfz-Getriebes.

Mit dem Erfindungsvorschlag kann die Montage eines Getriebes in völlig neuer Weise erfolgen, da es nicht notwendig ist, die Getriebewellen und die Schaltgestänge gleichzeitig montieren zu müssen. Die Schaltgestänge können beispielsweise - vormontiert mit dem Kunststoff-Trägerteil - an den Lagerträger hinzugefügt werden, wenn die Getriebewellen mittels des Lagerträgers bereits vollständig montiert sind.

Ferner zeichnet sich der so hergestellte Lagerträger durch ein geringes Gewicht aus, da für die von der Kraftbeaufschlagung her gesehen untergeordneten Lagerung des Schaltgestänges ein Kunststoffteil zum Einsatz kommen kann.

Schließlich kann durch dieses Vorgehen auch eine hohe Lagerpräzision erreicht werden, da sowohl das Kunststoff-Trägerteil als auch die Aussparung im Lagerträger in einfacher Weise mit hoher Präzision kostengünstig hergestellt werden können. Beim Umspritzen der Lagerringe des zweiten Lagers kann eine sehr hohe Präzision bei geringen Kosten erzielt werden. Weiterhin ist der Werkzeugaufwand bei der Fertigung des Lagerträgers geringer als bei vorbekannten Lösungen; es werden Mehrfachwerkzeuge möglich.

Die vorgeschlagene Lageranordnung kommt bevorzugt in Pkw-Getrieben zum Einsatz. Grundsätzlich geeignet ist sie jedoch für alle Anwendungen, bei denen das Lager mit einem Lagerträger verbunden als Einheit eingesetzt wird.

In der Zeichnung ist ein Ausführungsbeispiel der Erfindung dargestellt. Es zeigen:
- Figur 1: den Schnitt durch das Kunststoff-Trägerteil der Lageranordnung (Schnitt A-B gemäß Fig. 3),
- Figur 2: den Lagerträger der Lageranordnung ohne angebrachtes Kunststoff-Trägerteil in der Draufsicht und
- Figur 3: den fertig montierten Lagerträger in der Draufsicht.
die zu der Lageranordnung 1 zusammengefügt werden, wie sie in Fig. 3 gezeigt ist.

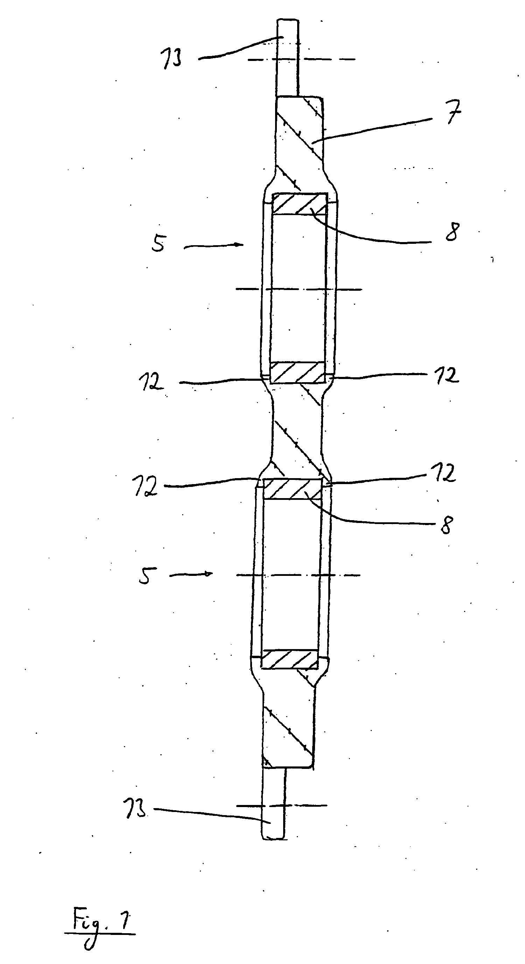

In Fig. 1 ist ein Spritzgießformteil dargestellt, das im wesentlichen aus einem Kunststoff-Trägerteil 7 besteht. Dieses ist im klassischen Spritzgießprozess gefertigt worden, wobei ein bekanntes Kunststoffmaterial zum Einsatz kommt. Dabei kann es sich sowohl um einen Thermoplast als auch um einen Duroplast handeln, wobei die Materialwahl in Abhängigkeit des späteren Anwendungsfalls der Lageranordnung erfolgt.

Wesentlich ist, dass beim Spritzgießen des Kunststoff-Trägerteils 7 Lagerringe 8 (Außenringe) eines zweiten Lagers 5 per Umspritzen mit dem Trägerteil 7 fest verbunden werden. Dabei werden beidseitig der Lagerringe 8 axiale Umgriffe 12 mit angespritzt, so dass die Lagerringe 8 relativ zum Trägerteil 7 radial und axial festgelegt sind.

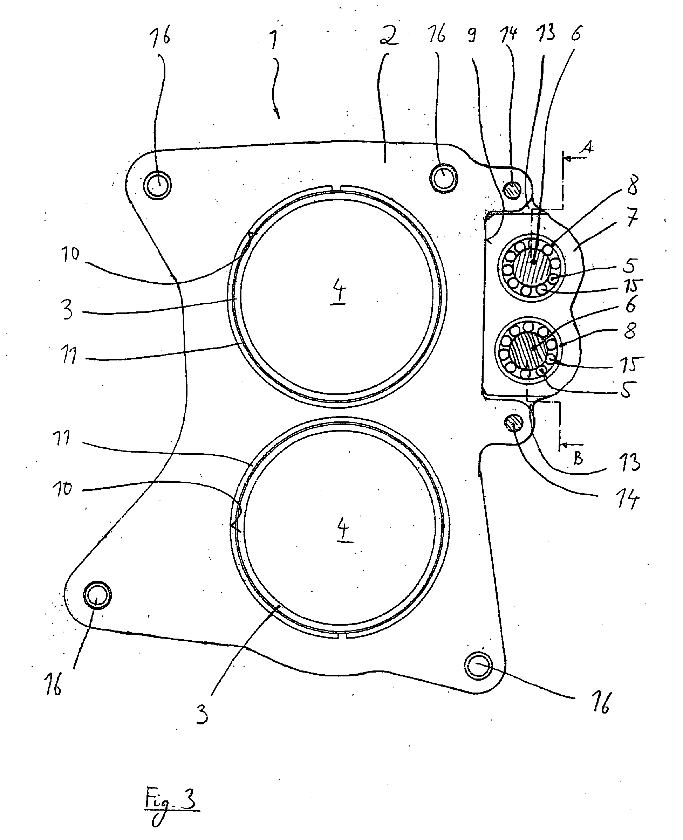

Die beiden zweiten Lager 5 dienen zur Lagerung bzw. Führung zweier Schaltstangen eines Pkw-Handschaltgetriebes. Die Schaltstangen sind als stangenförmige Bauteile in Fig. 3 mit der Bezugsziffer 6 markiert.

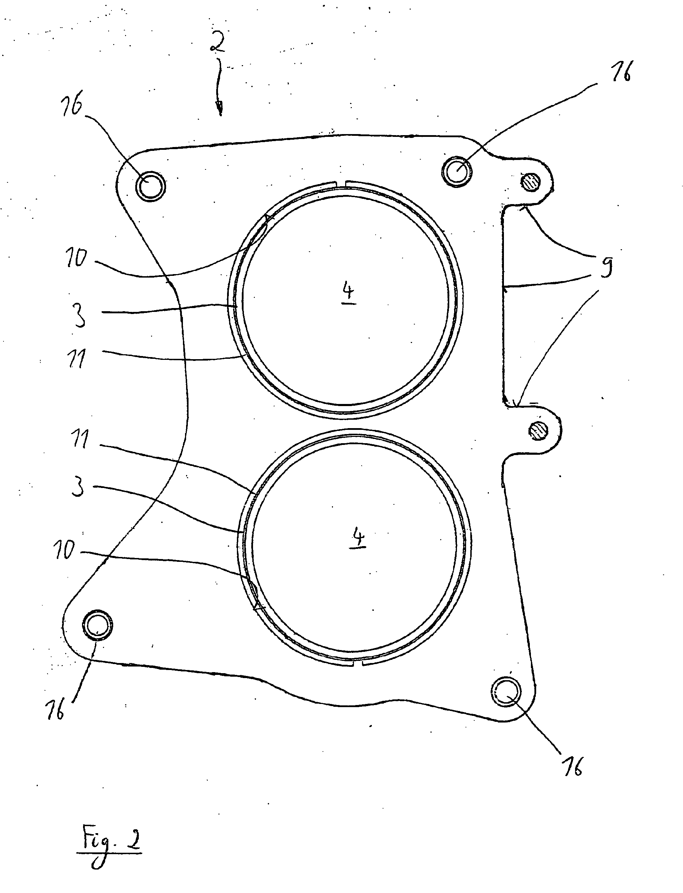

Ferner weist das Trägerteil 7 Verbindungsabschnitte 13 auf, die als flächige Fortsetzungen des Trägerteil-Grundkörpers ausgebildet sind und Bohrungen aufweisen, mittels derer sie später am in Fig. 2 skizzierten Lagerträger 2 festgelegt werden können. Das Trägerteil 7 weist dabei in der Draufsicht eine im wesentlichen viereckige, blockförmige Ausgestaltung auf, wie es in Fig. 3 gesehen werden kann.

Der aus einem ebenen Blechteil spanlos gefertigte Lagerträger 2 ist in Fig. 2 zu sehen. Wichtiger Bestandteil des Lagerträgers 2 sind einmal die kreisförmigen Aufnahmen 10 für die Lageraußenringe 11 zweier erster Lager 3, die zur Lagerung zweier parallel nebeneinander angeordneter Wellenteil 4 in Form von Getriebewellen vorgesehen sind. Ein weiterer wichtiger Bestandteil des Lagerträgers 2 ist eine Ausnehmung 9 im Lagerträger, die zur Aufnahme des Kunststoff-Trägerteils 7 ausgebildet ist. Die Ausnehmung 9 weist daher eine zur Form des Trägerteils 7 korrespondierende Form auf.

Damit der Lagerträger 2 an einem Bauteil, namentlich an einem Getriebegehäuse festgelegt werden kann, sind Befestigungselemente 16 vorgesehen, mit denen der Lagerträger 2 am Getriebegehäuse beispielsweise festgeschraubt werden kann.

Wie in Fig. 3 gesehen werden kann, wird das Kunststoff-Trägerteil 7 nach dem passgenauen Einsetzen in die Aussparung 9 im Lagerträger 2 mittels der Verbindungsabschnitte 13 und einer nur schematisch angedeuteten Schraubverbindung 14 am Lagerträger 2 fixiert. Es ist dabei möglich, dass schon vor dem Festlegen des Kunststoff-Trägerteils 7 am Lagerträger 2 die Schaltstangen 6 in das Trägerteil 7 vormontiert werden, dass es sich hierbei also um eine vormontierte Einheit handelt, was montagetechnisch sehr vorteilhaft ist. Es kann ein separater Einpressvorgang des Außenringes 8 des zweiten Lagers 5 - wie beim Stand der Technik - entfallen.

Wie in Fig. 3 gesehen werden kann, werden die Stangen 6 dadurch gelagert, dass sie mit einem Wälzkörpersatz 15 - der vorgesehene Käfig ist in Fig. 3 nicht dargestellt - versehen werden, der in den Lagerringen 8 läuft. In diesem Falle fungieren die Stangen 6 also selber als Innenringe des zweiten Lagers 5.

Im Ausführungsbeispiel vorgesehen sind Wälzlagerungen für die stangenförmigen Bauteile 6. Es können hier jedoch auch Gleitlagerungen zum Einsatz kommen, wobei dann die Lagerringe 8 Gleithülsen sind.

Die Festlegung des Kunststoff-Trägerteils 7 erfolgt im Ausführungsbeispiel mittels Anschrauben. Es kann hier jedoch jede beliebige form-, kraft- oder stoffschlüssige Verbindung vorgesehen werden.

### Bezugszeichenliste

- 1: Lageranordnung
- 2: Lagerträger
- 3: erstes Lager
- 4: Wellenteil
- 5: zweites Lager
- 6: stangenförmiges Bauteil
- 7: Kunststoff-Trägerteil
- 8: Lagerring des zweiten Lagers
- 9: Aufnahme (Aussparung) für das Kunststoff-Trägerteil
- 10: Aufnahme für einen Lagerring des ersten Lagers
- 11: Lagerring des ersten Lagers
- 12: axialer Umgriff
- 13: Verbindungsabschnitt
- 14: Schraubverbindung
- 15: Wälzkörpersatz/Rollensatz
- 16: Befestigungselement

## Patentansprüche

1. Verfahren zur Herstellung einer Lageranordnung (1), die einen Lagerträger (2) aufweist, der mindestens ein erstes Lager (3) zur zumindest radialen Lagerung eines Wellenteils (4) und mindestens ein zweites Lager (5) zur radialen Lagerung eines stangenförmigen Bauteils (6) aufweist,
**gekennzeichnet durch**
die folgenden Verfahrensschritte:
a) Herstellen eines Kunststoff Trägerteils (7) mittels Spritzgießen, wobei ein Lagerring (8) des zweiten Lagers (5) **durch** den Spritzgießvorgang bleibend mit dem Kunststoff Trägerteil (7) verbunden wird;
b) Herstellen eines Lagerträgers (2) aus eigensteifem Material, wobei in den Lagerträger (2) eine zur Aufnahme des Kunststoff-Trägerteils (7) vorgesehene Aufnahme (9) ausgebildet wird und wobei mindestens eine Aufnahme (10) für einen Lagerring (11) des ersten Lagers (3) ausgebildet wird;
c) Platzieren und Fixieren des Kunststoff Trägerteils (7) in der vorgesehenen Aufnahme (9) des Lagerträgers (2).

2. Verfahren nach Anspruch 1, **dadurch gekennzeichnet, dass** beim Spritzgießen des Kunststoff Trägerteils (7) gemäß Schritt a) nach Anspruch 1 der mindestens eine Lagerring (8) des zweiten Lagers (5) mindestens einseitig axial umspritzt wird, um einen axialen Umgriff (12) des Lagerrings (8) zu schaffen.

3. Verfahren nach Anspruch 2, **dadurch gekennzeichnet, dass** beim Spritzgießen des Kunststoff Trägerteils (7) der mindestens eine Lagerring (8) des zweiten Lagers (5) beidseitig axial umspritzt wird.

4. Verfahren nach einem der Ansprüche 1 bis 3, **dadurch gekennzeichnet, dass** beim Spritzgießen des Kunststoff Trägerteils (7) gemäß Schritt a) nach Anspruch 1 das Kunststoff-Trägerteil (7) mit mindestens einem Verbindungsabschnitt (13) versehen wird.

5. Verfahren nach einem der Ansprüche 1 bis 4, **dadurch gekennzeichnet, dass** beim Herstellen des Lagerträgers (2) gemäß Schritt b) nach Anspruch 1 ein ebenes Blechteil durch Umformen, insbesondere durch Stanzen, Pressen und/oder Tiefziehen, zu dem Lagerträger (2) ausgebildet wird.

6. Verfahren nach einem der Ansprüche 1 bis 5, **dadurch gekennzeichnet, dass** das Fixieren des Kunststoff Trägerteils (7) in der Aufnahme (9) des Lagerträgers (2) gemäß Schritt c) nach Anspruch 1 mittels Anschrauben erfolgt.

7. Verfahren nach einem der Ansprüche 1 bis 5, **dadurch gekennzeichnet, dass** das Fixieren des Kunststoff Trägerteils (7) in der Aufnahme (9) des Lagerträgers (2) gemäß Schritt c) nach Anspruch 1 mittels Vernieten erfolgt.

8. Lageranordnung (1), die einen Lagerträger (2) aufweist, der mindestens ein erstes Lager (3) zur zumindest radialen Lagerung eines Wellenteils (4) und mindestens ein zweites Lager (5) zur radialen Lagerung eines stangenförmigen Bauteils (6) aufweist,
**dadurch gekennzeichnet,**
**dass** der Lagerträger (2) aus einem Teil aus eigensteifem Material besteht und eine zur Aufnahme eines Kunststoff Trägerteils (7) vorgesehene Aufnahme (9) und mindestens eine Aufnahme (10) für einen Lagerring (11) des ersten Lagers (3) aufweist, wobei in die Aufnahme (9) das Kunststoff-Trägerteil (7) eingesetzt ist, das mindestens einen Lagerring (8) des zweiten Lagers (5) aufweist, das beim Spritzgießen des Kunststoff Trägerteils (7) in-situ mit dem Kunststoff Trägerteil (7) verbunden ist, und wobei das Kunststoff Trägerteil (7) am Lagerträger (2) fixiert ist.

9. Lageranordnung nach Anspruch 8, **dadurch gekennzeichnet, dass** das Kunststoff Trägerteil (7) den mindestens einen Lagerring (8) des zweiten Lagers (5) mindestens einseitig axial mittels eines axialen Umgriffs (12) umgreift.

10. Lageranordnung nach Anspruch 9, **dadurch gekennzeichnet, dass** das Kunststoff Trägerteil (7) den mindestens einen Lagerring (8) des zweiten Lagers (5) beidseitig axial mittels axialer Umgriffe (12) umgreift.

11. Lageranordnung nach einem der Ansprüche 8 bis 10, **dadurch gekennzeichnet, dass** das Kunststoff-Trägerteil (7) mindestens einen Verbindungsabschnitt (13) aufweist, mit dem das Kunststoff-Trägerteil (7) am Lagerträger (2) fixiert ist.

12. Lageranordnung nach einem der Ansprüche 8 bis 11, **dadurch gekennzeichnet, dass** der Lagerträger (2) aus einem ebenen Blechteil besteht, das durch Umformen, insbesondere durch Stanzen, Pressen und/oder Tiefziehen, zu dem Lagerträger (2) ausgebildet wird.

13. Lageranordnung nach einem der Ansprüche 8 bis 12, **dadurch gekennzeichnet, dass** das Kunststoff Trägerteil (7) in der Aufnahme (9) des Lagerträgers (2) mittels einer Schraubverbindung (14) festgelegt ist.

14. Lageranordnung nach einem der Ansprüche 8 bis 12, **dadurch gekennzeichnet, dass** das Kunststoff-Trägerteil (7) in der Aufnahme (9) des Lagerträgers (2) mittels einer Nietverbindung festgelegt ist.

15. Lageranordnung nach einem der Ansprüche 8 bis 14, **dadurch gekennzeichnet, dass** das erste Lager (3) ein Wälzlager ist.

16. Lageranordnung nach einem der Ansprüche 8 bis 15, **dadurch gekennzeichnet, dass** zwei erste Lager (3) nebeneinander im Lagerträger (2) angeordnet sind, wobei deren Drehachsen parallel zueinander ausgerichtet sind.

17. Lageranordnung nach einem der Ansprüche 8 bis 16, **dadurch gekennzeichnet, dass** das zweite Lager (5) ein Wälzlager ist.

18. Lageranordnung nach Anspruch 17, **dadurch gekennzeichnet, dass** zwischen dem Lagerring (8) des zweiten Lagers (5) und dem stangenförmigen Bauteil (6) ein Wälzkörpersatz oder Rollensatz (15) angeordnet ist.

19. Lageranordnung nach Anspruch 18, **dadurch gekennzeichnet, dass** der Wälzkörpersatz oder Rollensatz (15) einen Käfig aufweist.

20. Lageranordnung nach einem der Ansprüche 8 bis 16, **dadurch gekennzeichnet, dass** das zweite Lager (5) ein Gleitlager ist.

21. Lageranordnung nach einem der Ansprüche 8 bis 20, **dadurch gekennzeichnet, dass** der Lagerträger (2) im Bereich der Aufnahme (10) für den Lagerring (11) des ersten Lagers (3) in eine Ringnut im Außenumfang des Lagerrings (11) des ersten Lagers (3) eingreift.

22. Lageranordnung nach einem der Ansprüche 8 bis 20, **dadurch gekennzeichnet, dass** der Lagerträger (2) im Bereich der Aufnahme (10) für den Lagerring (11) des ersten Lagers (3) topfförmig ausgebildet ist und einen Sitzabschnitt für den Außenumfang des Lagerrings (11) des ersten Lagers (3) bildet.

23. Lageranordnung nach einem der Ansprüche 8 bis 22, **dadurch gekennzeichnet, dass** der Lagerträger (2) eine Anzahl Befestigungselemente (16) aufweist.

24. Lageranordnung nach Anspruch 23, **dadurch gekennzeichnet, dass** die Befestigungselemente (16) Bohrungen zum Durchtritt einer Schraube sind.

25. Lageranordnung nach Anspruch 23, **dadurch gekennzeichnet, dass** die Befestigungselemente (16) mit einem Gewinde versehene Bohrungen zum Zusammenwirken mit einer Schraube sind.

26. Lageranordnung nach einem der Ansprüche 23 bis 25, **dadurch gekennzeichnet, dass** der Lagerträger (2) im Bereich der Befestigungselemente (16) eine Verbreiterung in Achsrichtung des mindestens einen ersten Lagers (3) aufweist.

27. Lageranordnung nach einem der Ansprüche 8 bis 26, **dadurch gekennzeichnet, dass** der Lagerträger (2) aus gehärtetem Stahl besteht.

28. Lageranordnung nach einem der Ansprüche 8 bis 27, **dadurch gekennzeichnet, dass** das Wellenteil (4) Bestandteil einer Getriebewelle (4), insbesondere eine Kfz-Getriebes, ist.

29. Lagerträger nach einem der Ansprüche 8 bis 28, **dadurch gekennzeichnet, dass** das stangenförmige Bauteil (6) die Schaltstange eines Getriebes, insbesondere eines Kfz-Getriebes, ist.

## Claims

1. A method of producing a bearing assembly (1) which has a bearing carrier (2) which has at least one first bearing (3) for the at least radial mounting of a shaft member (4) and at least one second bearing (5) for the radial mounting of a rod-like component (6),
**characterised by**
the following method steps:
a) producing a plastics carrier part (7) by injection moulding, wherein a bearing ring (8) of the second bearing (5) is connected by the injection-moulding process permanently to the carrier part (7);
b) producing a bearing carrier (2) from inherently rigid material, wherein a socket (9) is formed in the bearing carrier (2) to accommodate the plastics carrier part (7) and wherein at least one socket (10) is formed for a bearing ring (11) of the first bearing (3);
c) positioning and locating the plastics carrier part (7) in the socket (9) of the bearing carrier (2) provided.

2. A method according to Claim 1, **characterised in that** during the injection-moulding of the plastics carrier part (7) in accordance with step a) of Claim 1 material is injected around the at least one bearing ring (8) of the second bearing (5) axially on at least one side so as to provide axial wrap around (12) of the bearing ring (8).

3. A method according to Claim 2, **characterised in that** during the injection-moulding of the plastics carrier part (7) material is injected around the at least one bearing ring (8) of the second bearing (5) axially on both sides.

4. A method according to any one of Claims 1 to 3, **characterised in that** during the injection-moulding of the plastics carrier part (7) in accordance with step a) of Claim 1 the plastics carrier part (7) is provided with at least one connecting portion (13).

5. A method according to any one of Claims 1 to 4, **characterised in that** during the production of the bearing carrier (2) in accordance with step b) of Claim 1 a flat sheet part is formed by deforming, in particular by stamping, pressing and/or deep-drawing, to form the bearing carrier (2).

6. A method according to any one of Claims 1 to 5, **characterised in that** the locating of the plastics carrier part (7) in the socket (9) of the bearing carrier (2) in accordance with step c) of Claim 1 is effected by a screw fastening.

7. A method according to any one of Claims 1 to 5, **characterised in that** the locating of the plastics carrier part (7) in the socket (9) of the bearing carrier (2) in accordance with step c) of Claim 1 is effected by rivetting.

8. A bearing assembly (1) which has a bearing carrier (2) which has at least one first bearing (3) for the at least radial mounting of a shaft member (4) and at least one second bearing (5) for the radial mounting of a rod-like component (6),
**characterised in**
**that** the bearing carrier (2) comprises a part of inherently rigid material and a socket (9) provided to accommodate a plastics carrier part (7) and at least one socket (10) for a bearing ring (11) of the first bearing (3), wherein there is inserted into the socket (9) the plastics carrier part (7) which has at least one bearing ring (8) of the second bearing (5) which during the injection-moulding of the plastics carrier part (7) is connected in situ with the plastics carrier part (7), and wherein the plastics carrier part (7) is located on the bearing carrier (2).

9. A bearing assembly according to Claim 8, **characterised in that** the plastics carrier part (7) engages around the at least one bearing ring (8) of the second bearing (5) axially at least on one side by means of axial wrap around (12).

10. A bearing assembly according to Claim 9, **characterised in that** the plastics carrier part (7) engages around the at least one bearing ring (8) of the second bearing (5) axially on both sides by means of axial wrap around (12).

11. A bearing assembly according to any one of Claims 8 to 10, **characterised in that** the plastics carrier part (7) has at least one connecting portion (13) by which the plastics carrier part (7) is located on the bearing carrier (2).

12. A bearing assembly according to any one of Claims 8 to 11, **characterised in that** the bearing carrier (2) comprises a flat sheet part is formed by deforming, in particular by stamping, pressing and/or deep-drawing, to become the bearing carrier (2).

13. A bearing assembly according to any one of Claims 8 to 12, **characterised in that** the plastics carrier part (7) in the socket (9) of the bearing carrier (2) is located by a screw connection (14).

14. A bearing assembly according to any one of Claims 8 to 12, **characterised in that** the plastics carrier part (7) in the socket (9) of the bearing carrier (2) is located by a rivetted connection.

15. A bearing assembly according to any one of Claims 8 to 14, **characterised in that** the first bearing (3) is a rolling bearing.

16. A bearing assembly according to any one of Claims 8 to 15, **characterised in that** the two first bearings (3) are arranged side by side in the bearing carrier (2), their axes of rotation being aligned parallel to one another.

17. A bearing assembly according to any one of Claims 8 to 16, **characterised in that** the second bearing (3) is a rolling bearing.

18. A bearing assembly according to Claim 17, **characterised in that** a rolling body set or roller set (15) is disposed between the bearing ring (8) of the second bearing (5) and the rod-like component (6).

19. A bearing assembly according to Claim 18, **characterised in that** the rolling body set or roller set (15) has a cage.

20. A bearing assembly according to any one of Claims 8 to 16, **characterised in that** the second bearing (5) is a plain bearing.

21. A bearing assembly according to any one of Claims 8 to 20, **characterised in that** in the vicinity of the socket (10) for the bearing ring (11) of the first bearing (3) the bearing carrier (2) engages into an annular groove in the outer circumference of the bearing ring (11) of the first bearing (3).

22. A bearing assembly according to any one of Claims 8 to 20, **characterised in that** in the vicinity of the socket (10) for the bearing ring (11) of the first bearing (3) the bearing carrier (2) is of cup-shaped and forms a seat portion for the outer circumference of the bearing ring (11) of the first bearing (3).

23. A bearing assembly according to any one of Claims 8 to 22, **characterised in that** the bearing carrier (2) has a number of fastening elements (16).

24. A bearing assembly according to Claim 23, **characterised in that** the fastening elements (16) are bores for the passage of a screw.

25. A bearing assembly according to Claim 23, **characterised in that** the fastening elements (16) are bores provided with a thread for cooperation with a screw.

26. A bearing assembly according to any one of Claims 23 to 25, **characterised in that** in the vicinity of the fastening elements (16) the bearing carrier (2) has a widened portion in the axial direction of at least one first bearing (3).

27. A bearing assembly according to any one of Claims 8 to 26, **characterised in that** the bearing carrier (2) consists of hardened steel.

28. A bearing assembly according to any one of Claims 8 to 27, **characterised in that** the shaft member (4) is a component of a transmission shaft (4), in particular a motor vehicle transmission.

29. A bearing assembly according to any one of Claims 8 to 28, **characterised in that** the rod-like component (6) is the selector rod of a transmission, in particular a motor vehicle transmission.

## Revendications

1. Procédé de fabrication d'un ensemble de paliers (1) comprenant un support de paliers (2) qui présente au moins un premier palier (3) pour le support, au moins radial, d'un élément d'arbre (4) et au moins un deuxième palier (5) pour le support radial d'un élément (6) en forme de barre,
**caractérisé par le fait qu**'il comprend les étapes suivantes :
a) fabrication d'un élément support (7) en matière plastique par moulage par injection, lors de laquelle une bague de palier (8) du deuxième palier (5) est reliée de façon permanente à l'élément support (7) en matière plastique, par l'opération de moulage par injection,
b) fabrication d'un support de paliers (2) en matériau à rigidité intrinsèque, lors de laquelle un logement (9), destiné à recevoir l'élément support (7) en matière plastique, est réalisé dans le support de paliers (2) et au moins un logement (10), destiné à recevoir une bague de palier (11) du premier palier (3) est réalisé,
c) mise en place et fixation de l'élément support (7) en matière plastique dans le logement (9) prévu à cet effet du support de paliers (2).

2. Procédé selon la revendication 1, **caractérisé par le fait que** lors du moulage par injection de l'élément support (7) en matière plastique selon l'étape a) de la revendication 1, la bague de palier (8), au nombre d'au moins une, du deuxième palier (5) est surmoulée par injection dans le sens axial, au moins sur un côté, afin de créer un rebord (12) axial entourant la bague de palier (8).

3. Procédé selon la revendication 2, **caractérisé par le fait que** lors du moulage par injection de l'élément support (7) en matière plastique, la bague de palier (8), au nombre d'au moins une, du deuxième palier (5) est surmoulée par injection axialement sur les deux côtés.

4. Procédé selon une des revendications 1 à 3, **caractérisé par le fait que** lors du moulage par injection de l'élément support (7) en matière plastique selon l'étape a) de la revendication 1, ledit élément support (7) en matière plastique est pourvu d'au moins une partie d'assemblage (13).

5. Procédé selon une des revendications 1 à 4, **caractérisé par le fait que** lors de la fabrication du support de paliers (2) selon l'étape b) de la revendication 1, une pièce de tôle plane est soumise à un formage, notamment par découpage, compression et/ou emboutissage, pour réaliser le support de paliers (2).

6. Procédé selon une des revendications 1 à 5, **caractérisé par le fait que** la fixation de l'élément support (7) en matière plastique dans le logement (9) du support de paliers (2) selon l'étape c) de la revendication 1 est réalisée par vissage.

7. Procédé selon une des revendications 1 à 5, **caractérisé par le fait que** la fixation de l'élément support (7) en matière plastique dans le logement (9) du support de palier (2) selon l'étape c) de la revendication 1 est réalisée par rivetage.

8. Ensemble de paliers (1) comprenant un support de paliers (2) qui présente au moins un premier palier (3) pour le support, au moins radial, d'un élément d'arbre (4) et au moins un deuxième palier (5) pour le support radial d'un élément (6) en forme de barre,
**caractérisé par le fait que**
le support de paliers (2) est constitué d'un élément en matériau à rigidité intrinsèque et présente un logement (9), destiné à recevoir un élément support (7) en matière plastique, et au moins un logement (10) pour une bague de palier (11) du premier palier (3), sachant que le logement (9) reçoit l'élément support (7) en matière plastique qui présente au moins une bague de palier (8) du deuxième palier (5), lequel est relié in situ à l'élément support (7) en matière plastique, lors du moulage par injection de l'élément support (7) en matière plastique, et ledit élément support (7) en matière plastique est fixé au support de paliers (2).

9. Ensemble de paliers selon la revendication 8, **caractérisé par le fait que** l'élément support (7) en matière plastique entoure la bague de palier (8), au nombre d'au moins une, du deuxième palier (5) axialement sur au moins un côté, au moyen d'un rebord (12) axial.

10. Ensemble de paliers selon la revendication 9, **caractérisé par le fait que** l'élément support (7) en matière plastique entoure la bague de palier (8), au nombre d'au moins une, du deuxième palier (5) axialement sur les deux côtés, au moyen de rebords (12) axiaux.

11. Ensemble de paliers selon une des revendications 8 à 10, **caractérisé par le fait que** l'élément support (7) en matière plastique présente au moins une partie d'assemblage (13), par laquelle ledit élément support (7) en matière plastique est fixé au support de paliers (2).

12. Ensemble de paliers selon une des revendications 8 à 11, **caractérisé par le fait que** le support de paliers (2) est constitué d'une pièce de tôle plane qui est soumise à un formage, notamment par découpage, compression et/ou emboutissage, pour réaliser le support de paliers (2).

13. Ensemble de paliers selon une des revendications 8 à 12, **caractérisé par le fait que** l'élément support (7) en matière plastique est fixé par un assemblage vissé (14) dans le logement (9) du support de paliers (2).

14. Ensemble de paliers selon une des revendications 8 à 12, **caractérisé par le fait que** l'élément support (7) en matière plastique est fixé par un assemblage riveté dans le logement (9) du support de paliers (2).

15. Ensemble de paliers selon une des revendications 8 à 14, **caractérisé par le fait que** le premier palier (3) est un palier à roulement.

16. Ensemble de paliers selon une des revendications 8 à 15, **caractérisé par le fait que** deux premiers paliers (3) sont disposés l'un à côté de l'autre dans le support de paliers (2), leurs axes de rotation étant orientés parallèlement l'un à l'autre.

17. Ensemble de paliers selon une des revendications 8 à 16, **caractérisé par le fait que** le deuxième palier (5) est un palier à roulement.

18. Ensemble de paliers selon la revendication 17, **caractérisé par le fait qu'**un jeu de corps de roulement ou jeu de rouleaux (15) est disposé entre la bague de palier (8) du deuxième palier (5) et l'élément (6) en forme de barre.

19. Ensemble de paliers selon la revendication 18, **caractérisé par le fait que** le jeu de corps de roulement ou jeu de rouleaux (15) présente une cage.

20. Ensemble de paliers selon une des revendications 8 à 16, **caractérisé par le fait que** le deuxième palier (5) est un palier lisse.

21. Ensemble de paliers selon une des revendications 8 à 20, **caractérisé par le fait que** dans la région du logement (10) pour la bague de palier (11) du premier palier (3), le support de paliers (2) pénètre dans une gorge annulaire prévue dans le pourtour de la bague de palier (11) du premier palier (3).

22. Ensemble de paliers selon une des revendications 8 à 20, **caractérisé par le fait que** dans la région du logement (10) pour la bague de palier (11) du premier palier (3), le support de paliers (2) est conformé en godet et constitue un moyen d'appui pour le pourtour de la bague de palier (11) du premier palier (3).

23. Ensemble de paliers selon une des revendications 8 à 22, **caractérisé par le fait que** le support de palier (2) présente un certain nombre d'éléments de fixation (16).

24. Ensemble de paliers selon la revendication 23, **caractérisé par le fait que** les éléments de fixation (16) sont des trous destinés au passage d'une vis.

25. Ensemble de paliers selon la revendication 23, **caractérisé par le fait que** les éléments de fixation (16) sont des trous dotés d'un taraudage destiné à coopérer avec une vis.

26. Ensemble de paliers selon une des revendications 23 à 25, **caractérisé par le fait que** dans la région des éléments de fixation (16), le support de palier (2) présente un épaississement dans la direction axiale du premier palier (3), au nombre d'au moins un.

27. Ensemble de paliers selon une des revendications 8 à 26, **caractérisé par le fait que** le support de palier (2) est en acier trempé.

28. Ensemble de paliers selon une des revendications 8 à 27, **caractérisé par le fait que** l'élément d'arbre (4) fait partie d'un arbre de transmission (4), en particulier d'une transmission de véhicule automobile.

29. Ensemble de paliers selon une des revendications 8 à 28, **caractérisé par le fait que** l'élément (6) en forme de barre est la tringle de changement de vitesse d'une transmission, en particulier d'une transmission de véhicule automobile.
